# EUROPEAN PATENT APPLICATION

(11) **EP 4 566 716 A1**
(43) Date of publication of application: **11.06.2025**
(21) Application number: 23214286.9
(22) Date of filing: 05.12.2023
(51) Int. Cl.: B02C 2/00, B02C 2/04, B02C 23/00, F16J 15/00

(54) **DUST SEALING SYSTEM AND METHOD OF INSTALLING DUST SEALING SYSTEM IN CRUSHER**

(71) Applicant: FLSmidth A/S, 2500 Valby (DK)
(72) Inventor: KOCH, Tobias, Bad Sassendorf (DE); SCHNITKER, Alexander, Lippstadt (DE); PAETZ, Matthias, Lüdenscheid (DE); JURKOWSKI, Bartosz, Oelde (DE)
(74) Representative: Aera A/S

(57) **Abstract**

A dust sealing system (210) for a crusher (100) is provided. The dust sealing system (210) includes a plurality of sealing members (220) at least partly received within an annular groove (222) defined in a head center (150) of the crusher (100). The dust sealing system (210) further includes an actuating mechanism (600) for moving the plurality of sealing members (220) from a non-operating position to an operating position. The plurality of sealing members (220) together forms a dust seal ring (300) in the operating position and abuts a dust collar (202) of the crusher (100). A tolerance (C1) defined between the plurality of sealing members (220) and the dust collar (202) at the non-operating position is greater than a target tolerance (C2) defined between the plurality of sealing members (220) and the dust collar (202) at the operating position.

## Description

### TECHNICAL FIELD

The present disclosure relates to a sealing arrangement for a crusher, and more particularly, to a dust sealing system and a method of installing the dust sealing system in a crusher.

### BACKGROUND

Crushers, such as cone crushers and gyratory crushers, are used in various industries such as mining, and quarry for crushing bigger size materials such as rock into smaller particles to form sand and gravels for various applications. Due to the nature of application, the crusher is surrounded by huge amount of dust particles. Entry of such dust particles into the moving mechanical elements of the crusher will lead to high maintenance cost and operating cost, and crusher may lose reliability and durability within a shorter period than expected life span. Therefore, dust seal rings are used in the crusher to prevent entry of the dust particles and foreign particles into the mechanical elements of the crusher. The crusher includes multiple dust seal rings disposed at different locations based on the type of crushers and applications of the crushers.

In particular, a dust seal ring is located between a head center of a main shaft of the crusher and a dust collar to isolate the mechanical elements from a crushing chamber in which the bigger size materials are crushed to smaller particles. The dust seal ring is disposed within an annular groove defined in the head center before installing the main shaft into a housing of the crusher. While inserting the main shaft with the dust seal ring, due to a very small tolerance in a range of 0.5 mm to 2.2 mm, lowering the head center with the dust seal ring around the dust collar without causing damages to the dust seal ring is a cumbersome process. If the dust seal ring is damaged and not isolated properly, dust particles may enter into the delicate parts of the crusher and contaminate and damage the mechanical systems. The main shaft with mantle weights of around 32 tons require lifting equipment for installing the main shaft into the housing of the crusher. Therefore, maneuvering and adjusting the position of the head center of the main shaft during installation thereof within the housing of the crusher is a tedious and time-consuming task. Hence, there is need remains to develop a dust sealing system that will help to easily and freely install the main shaft within the housing of the crusher without damaging the dust seal ring.

### SUMMARY

In one aspect of the present disclosure a dust sealing ring for a crusher is disclosed. The dust sealing ring comprising:
a plurality of sealing members configured to be at least partly received within an annular groove of the crusher. Each sealing member comprising a body having a first end and a second end, a first engaging face defined at the first end of the body and a second engaging face defined at the second end of the body. The plurality of sealing members is configured to move from a non-operating position to an operating position where the first engaging face of sealing member contacts the second engaging face of adjacent sealing members to form the dust sealing ring.

In some embodiments the body of the sealing members have an arcuate shape, such as a circular shape.

In some embodiments the dust sealing ring comprises at least three sealing members. In some embodiments the dust sealing ring comprises at least four sealing members.

In some embodiments the first engaging face of the body comprises a first step portion defined at an outer circumference of the body and a second step portion defined at an inner circumference of the body.

In some embodiments the second engaging face of the body comprises a third step portion defined at the outer circumference of the body and a fourth step portion defined at the inner circumference of the body. The first step portion and the second step portion of the first engaging face of one sealing member are configured to engage with the third step portion and the fourth step portion, respectively, of the second engaging face of an adjacent sealing member. The third step portion and the fourth step portion of the second engaging face of the one sealing member are configured to engage with the first step portion and the second step portion, respectively, of the first engaging face of another adjacent sealing member.

In another aspect of the present disclosure, a dust sealing system for a crusher is disclosed. The dust sealing system includes a plurality of sealing members configured to be at least partly received within an annular groove defined in a head center of the crusher. The dust sealing system further includes an actuating mechanism configured to move the plurality of sealing members from a non-operating position to an operating position. The plurality of sealing members is together configured to form a dust seal ring in the operating position thereof and abut a dust collar of the crusher. A tolerance defined between the plurality of sealing members and the dust collar at the non-operating position is greater than a target tolerance defined between the plurality of sealing members and the dust collar at the operating position.

In some embodiments, the plurality of sealing members is received within a first cavity of the annular groove and the actuating mechanism is disposed within a second cavity of the annular groove defined adjacent the first cavity.

In some embodiments, the actuating mechanism includes an inflatable tube. The inflatable tube is configured to move the plurality of sealing members to the operating position.

In some embodiments, the actuating mechanism includes a fluid source configured to (i) supply a fluid to the second cavity and, (ii) to move the plurality of sealing members to the operating position.

In some embodiments, the actuating mechanism includes one or more fastening members configured to move the plurality of sealing members to the operating position.

In some embodiments, each of the plurality of sealing members includes an engaging portion configured to secure the dust seal ring in the operating position thereof.

In some embodiments, the dust sealing system includes a locking member configured to secure the dust seal ring in the operating position thereof.

In some embodiments, the dust sealing system further includes at least three sealing members.

In some embodiments each sealing member includes an arcuate body having a first end and a second end. Each sealing member further includes a first engaging face defined at the first end of the arcuate body and configured to engage with an adjacent sealing member. Each sealing member further includes a second engaging face defined at the second end of the arcuate body and configured to engage with an adjacent sealing member.

In some embodiments, the plurality of sealing members is circularly aligned such that the first engaging face of one sealing member is configured to engage with the second engaging face of a previous sealing member, and the second engaging face of the one sealing member is configured to engage with the first engaging face of a subsequent sealing member. The plurality of sealing members are together configured to form the dust seal ring.

In some embodiments, the first engaging face of the arcuate body includes a first step portion defined at an outer circumference of the arcuate body and a second step portion defined at an inner circumference of the arcuate body.

In some embodiments, the second engaging face of the arcuate body includes a third step portion defined at the outer circumference of the arcuate body and a fourth step portion defined at the inner circumference of the arcuate body. The first step portion and the second step portion of the first engaging face of the one sealing member is configured to engage with the third step portion and the fourth step portion, respectively, of the second engaging face of the previous sealing member, and the third step portion and the fourth step portion of the second engaging face of the one sealing member is configured to engage with the first step portion and the second step portion, respectively, of the first engaging face of the subsequent sealing member.

In another aspect of the present disclosure, a method of installing a dust seal ring in a crusher is disclosed. The method includes inserting a plurality of sealing members into a first cavity of an annular groove defined in a head center of the crusher, and inserting a main shaft along with the head center into a crushing chamber of the crusher over a dust collar. A tolerance defined between the plurality of sealing members and the dust collar is greater than a target tolerance defined between the plurality of sealing members and the dust collar during an operating position of the dust seal ring. The method further includes merging the plurality of sealing members to form the dust seal ring between the head center and the dust collar to achieve the target tolerance therebetween.

In some embodiments, the method further includes merging the plurality of sealing members by inflating an inflatable tube. The inflatable tube is disposed within a second cavity defined adjacent the first cavity of the annular groove.

In some embodiments, the method further includes merging the plurality of sealing members by supplying a fluid to the second cavity of the annular groove.

In some embodiments, the method further includes moving the plurality of sealing members to the operating position thereof by one or more fastening members.

In some embodiments, the method further includes securing the plurality of sealing members in the operating position thereof using an engaging portion of each of the plurality of sealing members.

In some embodiments, the method further includes securing the plurality of sealing members in the operating position thereof using a locking member.

Other features and aspects of this disclosure will be apparent from the following description and the accompanying drawings.

### BRIEF DESCRIPTION OF DRAWINGS

A better understanding of embodiments of the present disclosure (including alternatives and/or variations thereof) may be obtained with reference to the detailed description of the embodiments along with the following drawings, in which:
FIG. 1 is a partial cross-sectional view of an exemplary crusher, according to an embodiment of the present disclosure;
FIG. 2 is an enlarged view of a portion of the crusher of FIG. 1 showing a dust sealing system, according to an embodiment of the present disclosure;
FIG. 3A is an exploded view of a plurality of sealing members of the dust sealing system, according to an embodiment of the present disclosure;
FIG. 3B is a top view of the plurality of sealing members engaged each other to form a dust seal ring, according to an embodiment of the present disclosure;
FIG. 3C is a perspective view of one of the plurality of sealing members, according to an embodiment of the present disclosure;
FIG. 4 is an enlarged cross-sectional view showing an annular groove defined in a head center of a main shaft of the crusher, according to an embodiment of the present disclosure;
FIG. 5A is an enlarged cross-sectional view showing a non-operating position of the plurality of sealing members disposed within the annular groove, according to an embodiment of the present disclosure;
FIG. 5B is a schematic plan view illustrating the non-operating position of the plurality of sealing members, according to an embodiment of the present disclosure;
FIG. 6A is an enlarged cross-sectional view showing an operating position of the plurality of sealing members disposed within the annular groove, according to an embodiment of the present disclosure;
FIG. 6B is a schematic plan view illustrating the operating position of the plurality of sealing members, according to an embodiment of the present disclosure;
FIG. 7 schematically illustrates actuation of the plurality of sealing members using a fluid source, according to an embodiment of the present disclosure;
FIG. 8 schematically illustrates actuation of the plurality of sealing members using a fastening member, according to an embodiment of the present disclosure;
FIG. 9 schematically illustrates positioning of the plurality of sealing members in the operating position, according to an embodiment of the present disclosure;
FIG. 10 schematically illustrates overlapping of ends of two adjacent sealing members within the annular groove, according to an embodiment of the present disclosure; and
FIG. 11 is a schematic flow diagram of a method of installing the dust seal ring in the crusher, according to an embodiment of the present disclosure.

### DETAILED DESCRIPTION

Reference will now be made in detail to specific embodiments or features, examples of which are illustrated in the accompanying drawings. Wherever possible, corresponding or similar reference numbers will be used throughout the drawings to refer to the same or corresponding parts. Moreover, references to various elements described herein, are made collectively or individually when there may be more than one element of the same type. However, such references are merely exemplary in nature. It may be noted that any reference to elements in the singular may also be construed to relate to the plural and vice-versa without limiting the scope of the disclosure to the exact number or type of such elements unless set forth explicitly in the appended claim.

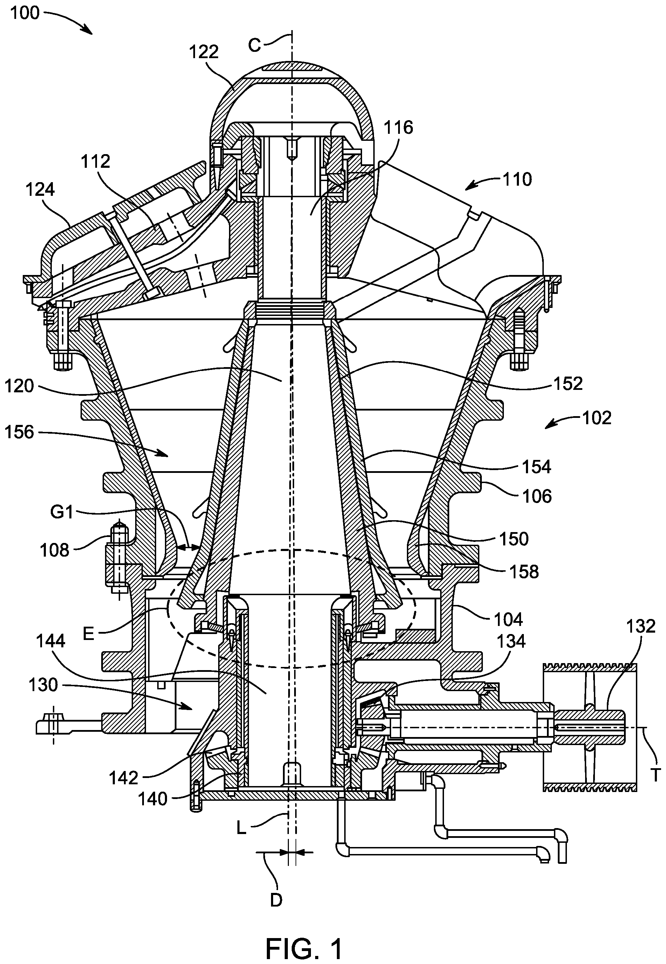

Referring to FIG. 1, a partial cross-sectional view of a crusher 100 is illustrated, according to an embodiment of the present disclosure. The crusher 100 is used for reducing bigger size materials such as, but not limited to, rocks into smaller size materials such as, but not limited to, sand, and gravel for various industrial and commercial applications. Various types of crusher include, but are not limited to, a gyratory crusher, a jaw crusher, and a cone crusher. For illustration purpose, a gyratory crusher is shown in FIG. 1 and explained various aspects of the present disclosure. However, the present disclosure may also be implemented in other types of crushers, such as the cone crusher, without limiting the scope of the claimed elements in the present disclosure.

The crusher 100 includes a housing 102 to accommodate various operating elements thereof. The housing 102 includes a bottom shell 104 and a top shell 106 coupled each other via fastening members 108. In some embodiments, the housing 102 may include a bottom shell, a middle shell, and a top shell coupled each other via fastening members. The crusher 100 further includes a spider 110 coupled to the top shell 106. The spider 110 includes a pair of arms 112 having outer ends coupled to the top shell 106 and inner ends defining a cavity along a central axis 'C' of the crusher 100 for receiving a top cylindrical portion 116 of a main shaft 120 of the crusher 100. A spider cap 122 is disposed on top of the spider 110 to enclose the cavity and an arm guard 124 is disposed around the pair of arms 112 of the spider 110. The spider 110 and the top shell 106 together configured to define an access opening for receiving the bigger size materials therethrough for crushing.

The bottom shell 104 includes a drive housing 130 for rotatably supporting a pinion shaft 132 disposed along a transverse axis 'T' defined perpendicular to the central axis 'C' of the crusher 100. One end of the pinion shaft 132 is coupled to a pinion gear 134 and another end is connected to a drive system (not shown) for receiving a rotary power therefrom. The crusher 100 further includes an eccentric 140 rotatably supported in the drive housing 130. The eccentric 140 is a hollow cylindrical body having a bottom end engaged with a bevel gear 142, which in turn engaged with the pinion gear 134. As such, the rotary power from the drive system is transferred to the eccentric 140 via the pinion gear 134 and the bevel gear 142 to rotate the eccentric 140 about the central axis 'C' of the crusher 100. The eccentric 140 defines a cavity along a longitudinal axis 'L' thereof to receive a bottom cylindrical portion 144 of the main shaft 120. The longitudinal axis 'L' of the cavity of the eccentric 140 is defined at an offset distance 'D' from the central axis 'C' of the crusher 100 such that the eccentric 140 is configured to cause oscillatory movement of the main shaft 120 about the central axis 'C' of the crusher 100.

The crusher 100 further includes at least a part of a hydraulic system (not shown) for moving the main shaft 120 up or down. The hydraulic system includes a hydraulic cylinder and a piston slidably disposed within the hydraulic cylinder. The hydraulic cylinder is fluid tightly attached to the drive housing 130 below the eccentric 140 along the central axis 'C' of the crusher 100. The piston is slidably disposed within the hydraulic cylinder in such a way to move the eccentric 140 up or down based on an actuation of the hydraulic system. The movement of the eccentric 140 causes movement of the main shaft 120 along the central axis 'C' of the crusher 100.

The main shaft 120 is rotatably disposed within the housing 102 of the crusher 100. Particularly, the top cylindrical portion 116 is rotatably received within the cavity defined by the spider 110 and the bottom cylindrical portion 144 is received within the cavity defined by the eccentric 140. The main shaft 120 further includes a head center 150 defining a conical outer circumference 152 between the top cylindrical portion 116 and the bottom cylindrical portion 144. The conical outer circumference 152 of the main shaft 120 is further surrounded by a mantle 154, which is otherwise referred to as the main shaft liner. The conical outer circumference 152 of the main shaft 120 and the top shell 106 of the housing 102 together define a crushing chamber 156. An inner surface of the top shell 106 of the housing 102 is surrounded by concaves 158, which is otherwise referred to as the crushing chamber liner.

During an operation of the crusher 100, the material is fed into the crushing chamber 156 of the housing 102 via the access opening defined between the top shell 106 and the spider 110. The pinion shaft 132 is coupled to the drive system such that the rotary power from the drive system is transferred to the eccentric 140 via the pinion gear 134 and the bevel gear 142. The eccentric 140 is engaged with the bottom cylindrical portion 144 of the main shaft 120 such that a rotational movement of the eccentric 140 causes a rotational movement of the main shaft along the longitudinal axis 'L'. Further, the offset distance 'D' between the longitudinal axis 'L' defined by the cavity of the eccentric 140 and the central axis 'C' of the crusher 100 causes the oscillatory movement of the main shaft 120 about the central axis 'C' of the crusher 100. A size at which the material to be crushed may be defined based on a gap `G1' defined between the mantle 154 and the concaves 158 at a lower portion thereof. The gap `G1' is varied by moving the main shaft 120 up or down with the help of the hydraulic system.

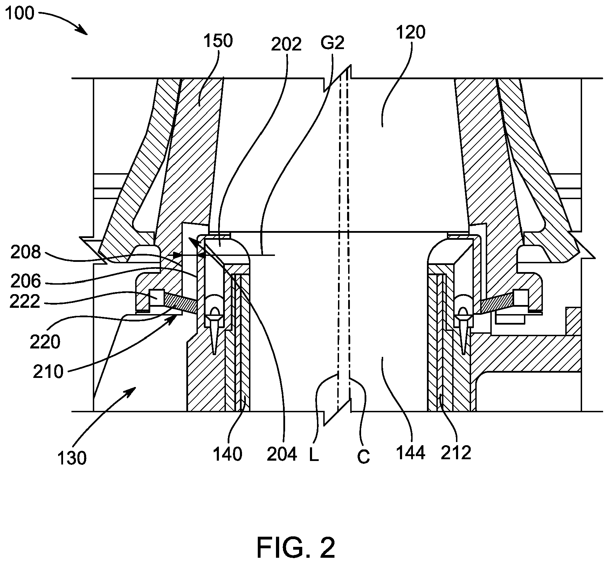

Referring to FIG. 2, an enlarged view of a portion `E' of the crusher 100 of FIG. 1 is illustrated, according to an embodiment of the present disclosure. The crusher 100 includes a dust collar 202 attached to the drive housing 130 using fastening members. Particularly, the dust collar 202 is attached to the drive housing 130 proximal to a top end of the eccentric 140. Further, at least a part of a bottom portion of the head center 150 is inserted over the dust collar 202. Specifically, a step portion 204 of the head center 150 is configured to surround the dust collar 202 in an installed condition of the main shaft 120 within the housing 102 of the crusher 100. A gap 'G2' is defined between an outer surface 206 of the dust collar 202 and an inner surface 208 of the step portion 204 of the head center 150 to freely insert the bottom cylindrical portion 144 of the main shaft 120 into the eccentric 140. In an embodiment, the gap 'G2' is defined based on the offset distance 'D' between the longitudinal axis 'L' of the cavity of the eccentric 140 and the central axis 'C' of the crusher 100. Due to such offset position of the main shaft 120 with respect to the central axis 'C' of the crusher 100, a radial width of the gap 'G2' between the step portion 204 of the head center 150 and the dust collar 202 varies along a periphery of the dust collar 202.

The crusher 100 further includes a dust sealing system 210 disposed between the step portion 204 of the head center 150 and the dust collar 202. The dust sealing system 210 is configured to achieve a fluid tight sealing between the dust collar 202 and the head center 150 to prevent entry of dust particles or foreign particles from outside of the crusher 100 to the mechanical elements such as, but not limited to, the eccentric 140, and an eccentric sleeve 212 disposed between the eccentric 140 and the bottom cylindrical portion 144 of the main shaft 120. The dust sealing system 210 of the present disclosure includes a plurality of sealing members 220 configured to be at least partly received within an annular groove 222 defined at the inner surface 208 of the step portion 204 of the head center 150.

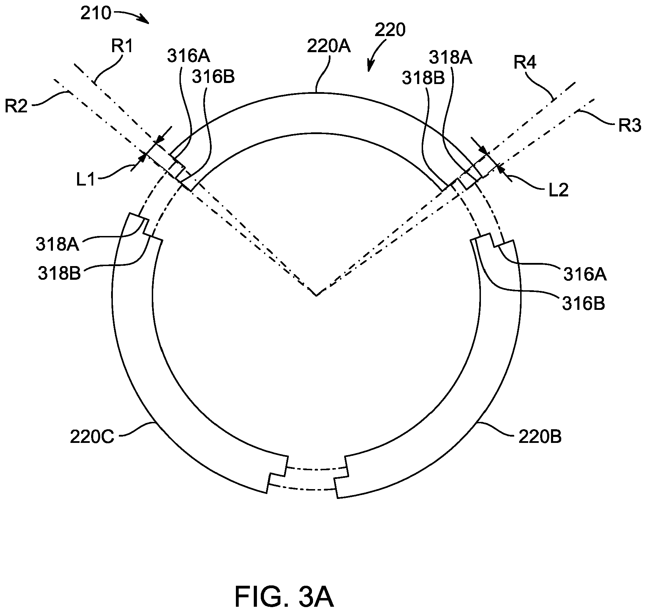

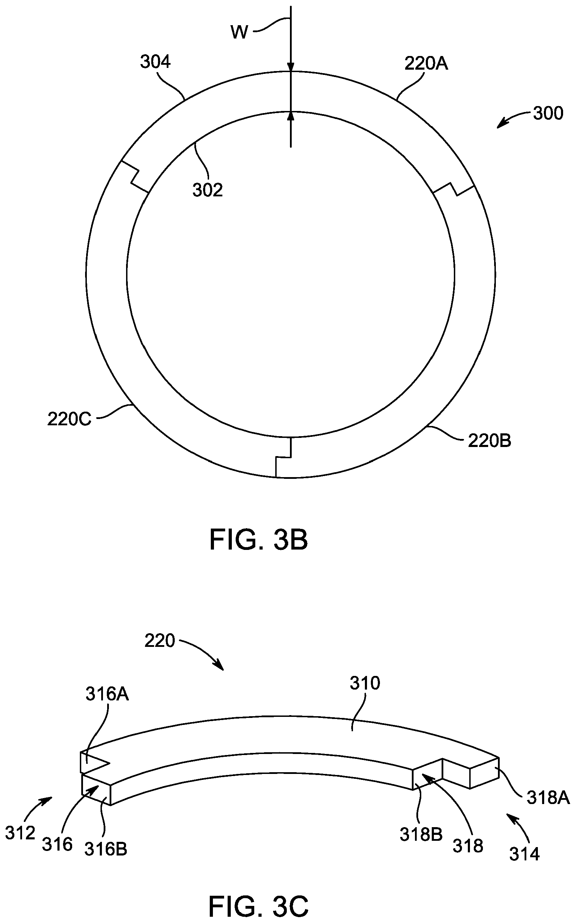

Referring to FIG. 3A, an exploded view of the plurality of sealing members 220 is illustrated, according to an embodiment of the present disclosure. According to the present disclosure, the dust sealing system 210 includes three sealing members. In some embodiments, the dust sealing system 210 may include two sealing members. In some embodiments, the dust sealing system 210 may include more than three sealing members. In an assembled position, as shown in FIG. 3B, the plurality of sealing members 220 is configured to engage each other to form a dust seal ring 300. The dust seal ring 300 includes an inner circumference 302 defining an inner diameter greater than or equal to an outer diameter defined by an outer circumference of the dust collar 202. Also, the dust seal ring 300 includes an outer circumference 304 and a width 'W' defined between the inner circumference 302 and the outer circumference 304. Referring to FIG. 3A and FIG. 3B, the dust sealing system 210 includes a first sealing member 220A, a second sealing member 220B configured to engage with the first sealing member 220A, and a third sealing member 220C configured to engage with the first sealing member 220A and the second sealing member 220B. The first sealing member 220A, the second sealing member 220B, and the third sealing member 220C are, hereinafter, collectively referred to as 'the sealing members 220' and individually referred to as 'the sealing member 220', unless otherwise specifically mentioned.

Referring to FIG. 3C, a perspective view of one of the plurality of sealing members 220 is illustrated, according to an embodiment of the present disclosure. Particularly, the first sealing member 220A is shown in FIG. 3C for illustration purpose of the present disclosure. The sealing member 220 includes an arcuate body 310 having a first end 312 and a second end 314. In an embodiment, the arcuate body 310 of the sealing member 220 may be made of a metal or a metal alloy. In some embodiments, the arcuate body 310 of the sealing member 220 may be made of a polymer or an elastomer. The sealing member 220 further includes a first engaging face 316 defined at the first end 312 of the arcuate body 310 and configured to engage with an adj acent sealing member. In other words, the first end 312 of the first sealing member 220A is configured to engage with the third sealing member 220C. The sealing member 220 further includes a second engaging face 318 defined at the second end 314 of the arcuate body 310 and configured to engage with an adjacent sealing member. In other words, the second end 314 of the first sealing member 220A is configured to engage with the second sealing member 220B. Referring to FIG. 3B, the plurality of sealing members 220 are circularly aligned such that the first engaging face 316 of one sealing member, such as the first sealing member 220A, is engaged with the second engaging face 318 of a previous sealing member, such as the third sealing member 220C, and the second engaging face 318 of the one sealing member, such as the first sealing member 220A, is engaged with the first engaging face 316 of a subsequent sealing member, such as the second sealing member 220B. As such, the plurality of sealing members 220 are together configured to form the dust seal ring 300.

The first engaging face 316 defined at the first end 312 of the arcuate body 310 includes a first step portion 316A defined at the outer circumference 304 of the arcuate body 310 and a second step portion 316B defined at the inner circumference 302 of the arcuate body 310. In an embodiment, the first step portion 316A is defined as a planar face along a first radial axis `R1' and the second step portion 316B is defined as a planar face along a second radial axis `R2'. In one embodiment, a width defined by the planar face of the first step portion 316A along the first radial axis `R1' may be substantially equal to a width defined by the planar face of the second step portion 316B along the second radial axis `R2'. In some embodiments, the width of the first step portion 316A may be different from the width of the second step portion 316B. Similarly, the second engaging face 318 defined at the second end 314 of the arcuate body 310 includes a third step portion 318A defined at the outer circumference 304 of the arcuate body 310 and a fourth step portion 318B defined at the inner circumference 302 of the arcuate body 310. In an embodiment, the third step portion 318A is defined as a planar face along a third radial axis 'R3' and the fourth step portion 318B is defined as a planar face along a fourth radial axis 'R4'. In one embodiment, a width defined by the planar face of the third step portion 318A along the third radial axis 'R3' is substantially equal to the width of the first step portion 316A and a width defined by the planar face of the fourth step portion 318B along the fourth radial axis 'R4' is substantially equal to the width of the second step portion 316B. Further, the second step portion 316B extends away from the first step portion 316A along a circumferential axis of the dust seal ring 300 at a first length `L1' which is equal to a second length 'L2' at which the third step portion 318A extends away from the fourth step portion 318B along the circumferential axis of the dust seal ring 300. As shown in FIG. 3B, the first step portion 316A and the second step portion 316B of the first engaging face 316 of the one sealing member, such as the first sealing member 220A, are configured to engage with the third step portion 318A and the fourth step portion 318B, respectively, of the second engaging face 318 of the previous sealing member, such as the third sealing member 220C, and the third step portion 318A and the fourth step portion 318B of the second engaging face 318 of the one sealing member, such as the first sealing member 220A, are configured to engage with the first step portion 316A and the second step portion 316B, respectively, of the first engaging face 316 of the subsequent sealing member, such as the second sealing member 220B. The aforementioned dimensional specifications and the constructional details of the first sealing member 220A is identical to the second sealing member 220B and the third sealing member 220C.

In some embodiments, the first engaging face 316 may include a triangular protrusion and the second engaging face 318 may include a triangular indentation corresponding to the triangular protrusion of the first engaging face 316. As such, the triangular protrusion of the first engaging face 316 of the first sealing member 220A is configured to engage with the triangular indentation of the second engaging face 318 of the third sealing member 220C, and the triangular indentation of the second engaging face 318 of the first sealing member 220A is configured to engage with the triangular protrusion of the first engaging face 316 of the second sealing member 220B. In some embodiments, the first engaging face 316 may include a semi-circular protrusion and the second engaging face 318 may include a semi-circular indentation corresponding to the semi-circular protrusion of the first engaging face 316. In some embodiments, the first engaging face 316 may include a protrusion of a polygon shape such as, but not limited to, a square, and a rectangle, and the second engaging face 318 may include an indentation corresponding to the polygon shape of the first engaging face 316.

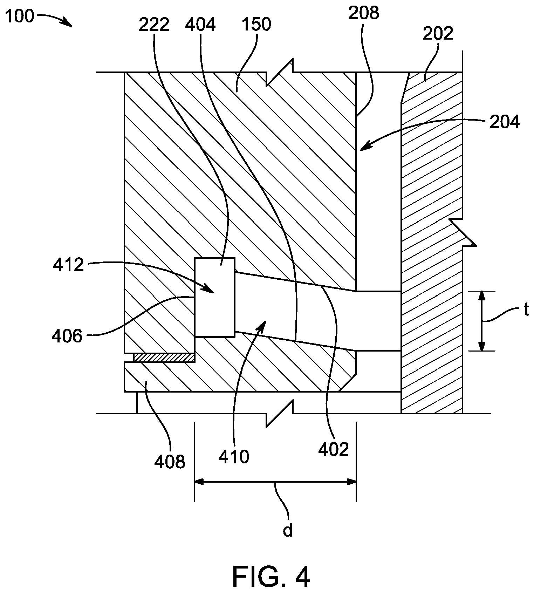

Referring to FIG. 4, an enlarged cross-sectional view of the crusher 100 showing the annular groove 222 defined in the head center 150 is illustrated, according to an embodiment of the present disclosure. The annular groove 222 extends radially inward from the inner surface 208 of the step portion 204 of the head center 150 at an angle with respect to a horizontal plane. The annular groove 222 includes a top inner face 402 and a bottom inner face 404 defining a thickness '1' therebetween. The annular groove 222 further includes a circumferential face 406 defining a depth 'd' of the annular groove 222 with respect to the inner surface 208 of the step portion 204 of the head center 150. The top inner face 402, the bottom inner face 404, and the circumferential face 406 together define a volume to accommodate the plurality of sealing members 220. In some embodiments, the bottom inner face 404 of the annular groove 222 may be defined by a seal retainer 408 attached to the head center 150. The annular groove 222 further includes a first cavity 410 defined proximal to the inner surface 208 of the head center 150 and a second cavity 412 defined proximal to the circumferential face 406. The first cavity 410 and the second cavity 412 of the annular groove 222 together define the volume.

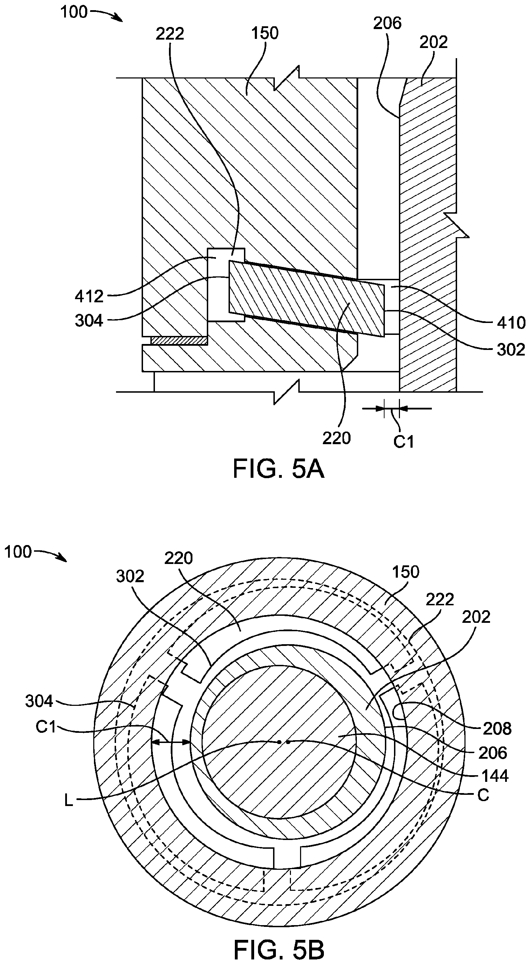

Referring to FIG. 5A, an enlarged cross-sectional view of the crusher 100 showing the plurality of sealing members 220 disposed in the annular groove 222 of the head center 150 is illustrated, according to an embodiment of the present disclosure. Particularly, a non-operating position of the plurality of sealing members 220 is shown in FIG. 5A. The non-operating position of the plurality of sealing members 220 may be defined as a position at which the plurality of sealing members 220 are disposed deeper into the annular groove 222 to establish a tolerance `C1' between the inner circumference 302 of the plurality of sealing members 220 and the outer surface 206 of the dust collar 202. As shown in FIG. 5B, the tolerance 'C1' varies along a periphery of the dust collar 202 due to the offset distance 'D' between the longitudinal axis 'L' defined by the cavity of the eccentric 140 and the central axis 'C' of the crusher 100. Referring to FIG. 5A and FIG. 5B, in the non-operating position of the plurality of sealing members 220, the tolerance 'C1' defined between the plurality of sealing members 220 and the outer surface 206 of the dust collar 202 is large enough to accommodate the offset position of the main shaft 120 such that, during an installation of the main shaft 120 within the housing 102, the bottom cylindrical portion 144 of the main shaft 120 may be freely received within the eccentric 140 without damaging the plurality of sealing members 220.

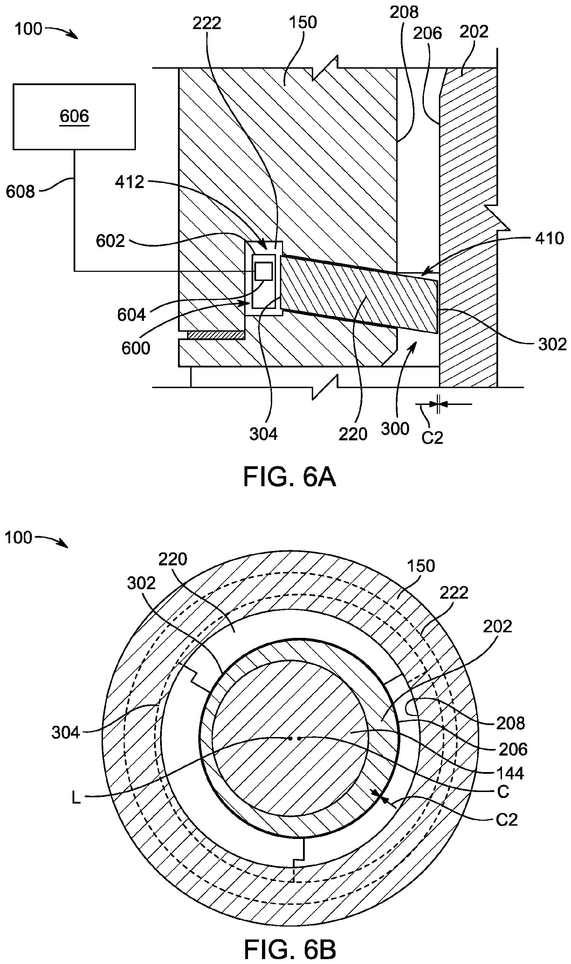

Referring to FIG. 6A, an enlarged cross-sectional view of the crusher 100 showing the plurality of sealing members 220 disposed in the annular groove 222 of the head center 150 is illustrated, according to an embodiment of the present disclosure. Particularly, an operating position of the plurality of sealing members 220 is shown in FIG. 6A. The operating position of the plurality of sealing members 220 may be defined as a position at which the plurality of sealing members 220 are circularly aligned and engaged each other to define the dust seal ring 300. As shown in FIG. 6B, the inner circumference 302 of the plurality of sealing members 220 is configured to abut with the outer surface 206 of the dust collar 202 to define a target tolerance 'C2' between the plurality of sealing members 220 and the dust collar 202. The target tolerance 'C2' may be defined as a gap defined between the plurality of sealing members 220 and the dust collar 202 to allow a rotational movement of the main shaft 120 while preventing entry of dust particles and foreign particles from outside of the crusher 100 to the mechanical elements of the crusher 100. Referring to FIG. 6A and FIG. 6B, the crusher 100 includes an actuating mechanism 600 configured to be disposed within the second cavity 412 of the annular groove 222 defined adjacent the first cavity 410 and the plurality of sealing members 220 is received within the first cavity 410 of the annular groove 222. The actuating mechanism 600 is configured to move the plurality of sealing members 220 from the non-operating position to the operating position thereof. As such, the plurality of sealing members 220 is together configured to form the dust seal ring 300 in the operating position thereof and abut the dust collar 202 of the crusher 100. Moreover, the tolerance 'C1' defined between the plurality of sealing members 220 and the dust collar 202 at the non-operating position is greater than the target tolerance 'C2' defined between the plurality of sealing members 220 and the dust collar 202 at the operating position.

In some embodiments, the actuating mechanism 600 includes an inflatable tube 602 disposed within the second cavity 412 of the annular groove 222. The inflatable tube 602 may have a length equal to or greater than a peripheral length defined by the circumferential face 406 of the annular groove 222 such that the inflatable tube 602 may be disposed in the second cavity 412 adjacent the plurality of sealing members 220 along a peripheral length defined by the outer circumference 304 of the plurality of sealing members 220. The inflatable tube 602 may include a valve 604 configured to engage with a fluid source 606. The fluid source 606 is an external device outside the crusher 100 and configured to store a fluid. According to the present disclosure, the fluid source 606 may be configured to store a gas in a compressed state. In an example, the fluid source 606 may store gases such as, but not limited to, air, nitrogen, and carbon dioxide. In some examples, the fluid source 606 may contain a liquid to inflate the inflatable tube 602. The fluid source 606 may be fluid tightly coupled with the valve 604 of the inflatable tube 602 via a hose 608. In an example, the valve 604 may be a one directional valve or a check valve that may allow flow of fluid only in one direction. In some embodiments, the head center 150 may include an access opening to access the valve 604 of the inflatable tube 602 disposed within the second cavity 412 of the annular groove 222. The inflatable tube 602 is configured to move the plurality of sealing members 220 from the non-operating position to the operating position thereof upon inflation of the inflatable tube 602 using the fluid source 606. The inflation of the inflatable tube 602 causes the plurality of sealing members 220 to engage each other in the operating position thereof to form the dust seal ring 300 such that the inner circumference 302 of the dust seal ring 300 abuts the outer surface 206 of the dust collar 202.

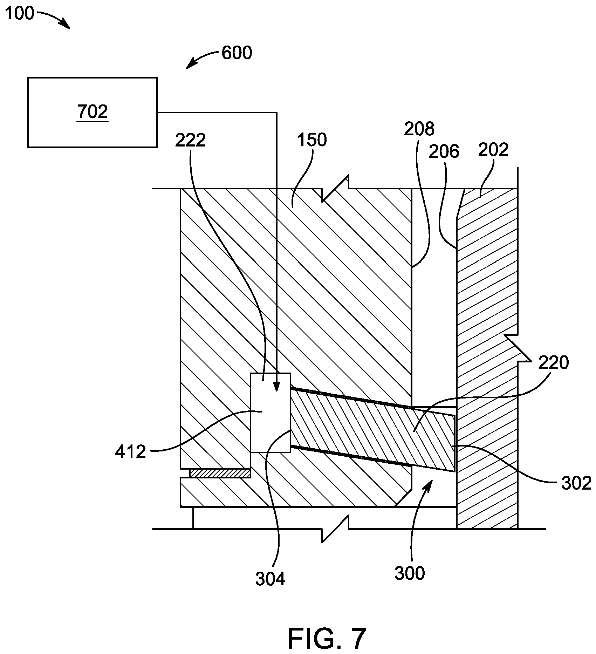

In some embodiments, as shown in FIG. 7, the actuating mechanism 600 includes a fluid source 702 configured to fluidly communicate with the second cavity 412 of the annular groove 222. The fluid source 702 is an external device outside the crusher 100 and configured to store a gas. In an example, the fluid source 702 may store gases such as, but not limited to, air, nitrogen, and carbon dioxide. In some embodiments, the head center 150 may include an opening to access the second cavity 412 of the annular groove 222. The fluid source 702 may be configured to fluidly couple with the opening of the head center 150 and configured to (i) supply a fluid, such as the gas, to the second cavity 412 and, (ii) to move the plurality of sealing members 220 from the non-operating position to the operating position thereof upon actuation of the fluid source 702. Supply of compressed gas may cause the plurality of sealing members 220 to engage each other in the operating position thereof and form the dust seal ring 300 such that the inner circumference 302 of the dust seal ring 300 abuts the outer surface 206 of the dust collar 202.

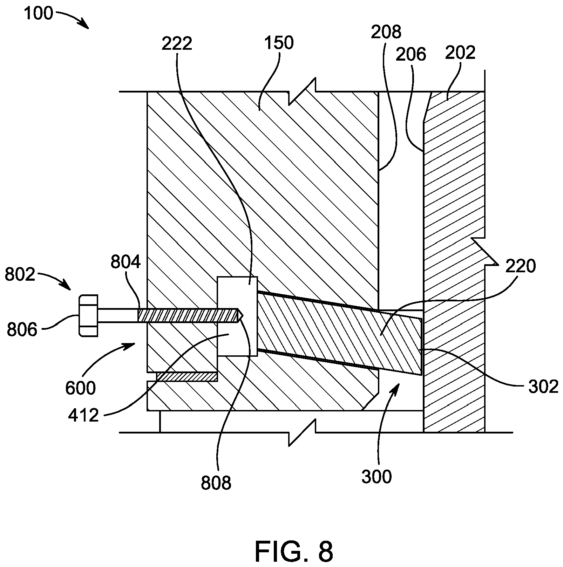

In some embodiments, as shown in FIG. 8, the actuating mechanism 600 includes one or more fastening members 802 attached to the head center 150. In an exemplary embodiment, the fastening member 802 may include a bolt 804 configured to attach with the head center 150 along a radial axis. The bolt 804 includes a first end 806 disposed outside the head center 150 for a user to access the bolt 804 and a second end 808 disposed within the second cavity 412 of the annular groove 222. The second end 808 of the bolt 804 is further configured to engage with the outer circumference 304 of the sealing members 220. The user may use tools such as screw drivers to threadably move the bolt 804 along the radial axis towards the sealing members 220. As such, the fastening members 802 are configured to move the plurality of sealing members 220 from the non-operating position to the operating position thereof. Radial inward movement of the fastening members 802 may cause the plurality of sealing members 220 to engage each other in the operating position thereof and form the dust seal ring 300 such that the inner circumference 302 of the dust seal ring 300 abuts the outer surface 206 of the dust collar 202. In some embodiments, the fastening member 802 may include a sliding member having a first end disposed in the second cavity 412 of the annular groove 222 and a second end disposed outside the head center 150. The first end of the sliding member may be further configured to engage with the outer circumference 304 of the sealing members 220 and the second end may be operated by the user. As such, movement of the sliding member may cause the plurality of sealing members 220 to engage each other in the operating position thereof and form the dust seal ring 300 such that the inner circumference 302 of the dust seal ring 300 abuts the outer surface 206 of the dust collar 202.

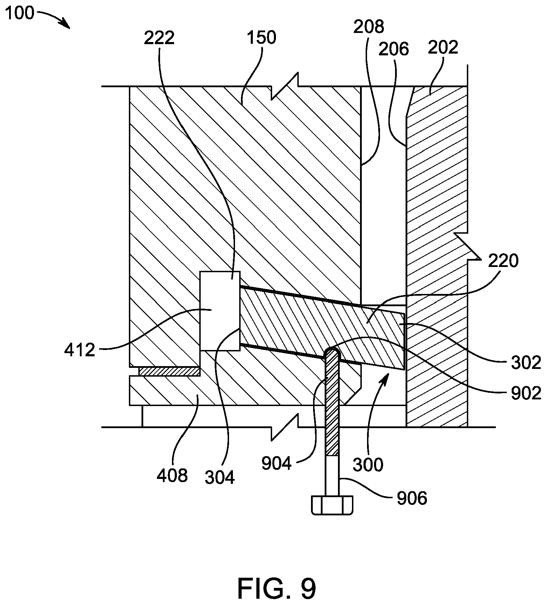

In some embodiments, as shown in FIG. 9, each of the plurality of sealing members 220 includes an engaging portion 902 configured to secure the dust seal ring 300 in the operating position thereof. In an exemplary embodiment, the engaging portion 902 may be a notch having a semi-circular cross section defined at a bottom surface of the sealing member 220. Correspondingly, a through hole 904 may be defined in the seal retainer 408. In the operating position of the sealing members 220, the engaging portion 902 of the sealing members 220 and the through hole 904 of the seal retainer 408 may be aligned. The crusher 100 further includes a locking member 906 configured to secure the dust seal ring 300 in the operating position thereof. In an example, the locking member 906 may be a threaded bolt. The threaded bolt is received through the through hole 904 of the seal retainer 408 and configured to engage with the engaging portion 902 of the sealing members 220. As such, the engaging portion 902 of the sealing member 220 and the locking member 906 together configured to secure the dust seal ring 300 in the operating position to abut the inner circumference 302 of the sealing members 220 with the outer surface 206 of the dust collar 202. In some embodiments, the locking member 906 may include a sliding device configured to engage with the engaging portion 902 of the sealing member 220 to secure the dust seal ring 300 in the operating position thereof. In some embodiments, the locking member 906 may include a pair of magnets. In such a case, one magnet may be disposed on the top inner face 402 or the bottom inner face 404 of the annular groove 222 and another magnet may be disposed on a corresponding bottom surface or a top surface of the sealing member 220 to engage each other at the operating position of the sealing member 220. In one example, the magnet may be a permanent magnet. In another example, the magnet may be an electro magnet.

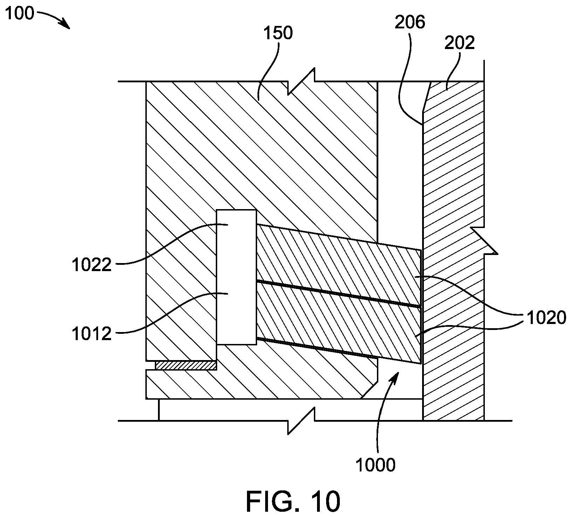

Referring to FIG. 10, an engagement of ends of two adjacent sealing members 1020 is schematically illustrated, according to an embodiment of the present disclosure. Particularly, an end of one of the two adjacent sealing members 1020 is placed over an end of the other adjacent sealing member 1020 within an annular groove 1022 to form a dust seal ring 1000 at an operating position of the sealing members 1020. Such orientation of the ends of the adjacent sealing members 1020 is referred to as the vertical overlapping of the sealing members 1020. The engagement of the ends of two adj acent sealing members 220, described in FIG. 3A and 3B, is referred to as the horizontal overlapping of the sealing members 220. In one example, the ends of the two adjacent sealing members 1020 may vertically overlap along a circumferential axis of the dust seal ring 1000. In another example, the ends of the two adjacent sealing members 1020 may vertically overlap along a radial axis of the dust seal ring 1000. The actuating mechanism 600 may be disposed within a second cavity 1012 of the annular groove 1022 to vertically overlap ends of the two adjacent sealing members 1020. In some embodiments, a thickness of the annular groove 1022 may be greater than a thickness of the sealing member 1020 to accommodate the vertical overlapping arrangement of the sealing members 1020. In some embodiments, thickness of the sealing members 1020 at the ends thereof may be smaller to accommodate the vertical overlapping arrangement of the sealing members 1020 within the annular groove 1022.

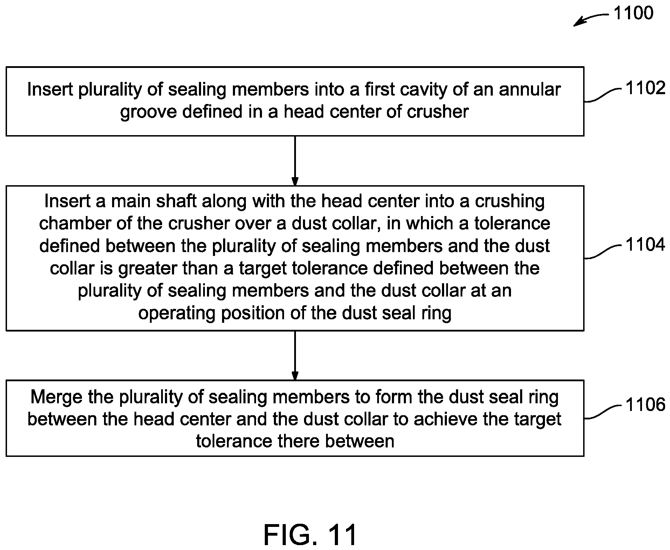

Referring to FIG. 11, a schematic flow diagram of a method 1100 of installing the dust seal ring 300 in the crusher 100 is illustrated, according to an embodiment of the present disclosure. The order in which the method 1100 described is not intended to be construed as a limitation, and any number of the described method steps can be combined in any order to implement the method 1100. Additionally, individual steps may be removed or skipped from the method 1100 without departing from the spirit and scope of the present disclosure. The method 1100 of the present disclosure is illustrated with reference to the crusher 100 and the dust sealing system 210 described in FIG. 1 through FIG. 10.

At step 1102, the method 1100 includes inserting the plurality of sealing members 220 into the first cavity 410 of the annular groove 222 defined in the head center 150 of the crusher 100. During an assembly of the crusher 100, the housing 102 of the crusher 100 may be installed within a plant. The pinion shaft 132 and the eccentric 140 are installed within the drive housing 130 of the bottom shell 104. The dust collar 202 may be further attached to the drive housing 130 via fastening members. The main shaft 120 along with the head center 150 are assembled outside the crusher 100. Particularly, the seal retainer 408 may be coupled to the head center 150 to define the annular groove 222 in the head center 150. Further, the plurality of sealing members 220 is disposed within the first cavity 410 of the annular groove 222. Particularly, the first sealing member 220A, the second sealing member 220B and the third sealing member 220C are inserted into the annular groove 222 in such a way that the sealing members 220 are pulled apart from each other. Further, the plurality of sealing members 220 may be inserted deeper into the annular groove 222 such that the plurality of sealing members 220 may occupy at least a part of the second cavity 412. With such arrangement of the plurality of sealing members 220 within the annular groove 222, particularly, at the non-operating position of plurality of sealing members 220, the tolerance `C1' defined between the inner circumference 302 of the plurality of sealing members 220 and the outer surface 206 of the dust collar 202 is greater than the target tolerance 'C2'.

The actuating mechanism 600 is disposed in the second cavity 412 of the annular groove 222. According to the present disclosure, the plurality of sealing members 220 may be disposed within the first cavity 410 after inserting the actuating mechanism 600 in the second cavity 412 of the annular groove 222. In some embodiments, the inflatable tube 602 is inserted into the second cavity 412 of the annular groove 222 and then the plurality of sealing members 220 may be inserted into the first cavity 410 of the annular groove 222. Further, the valve 604 of the inflatable tube 602 may be aligned with the access opening of the head center 150 to couple with the fluid source 606. In some embodiments, the one or more fastening members 802 may be coupled to the head center 150 after disposing the plurality of sealing members 220 in the first cavity 410 of the annular groove 222. In some embodiments, the locking member 906 may also be attached to the seal retainer 408.

At step 1104, the method 1100 includes inserting the main shaft 120 along with the head center 150 into the crushing chamber 156 of the crusher 100 over the dust collar 202. Upon assembling the main shaft 120, as discussed in the step 1102, the main shaft 120 is inserted into the housing 102 of the crusher 100. The main shaft 120 may be inserted into the housing 102 via a lifting equipment. The bottom cylindrical portion 144 of the main shaft 120 may be further aligned with the eccentric 140 and inserted into the eccentric 140. As the tolerance 'C1' defined between the plurality of sealing members 220 and the dust collar 202 is greater than the target tolerance 'C2' defined between the plurality of sealing members 220 and the dust collar 202, the step portion 204 of the head center 150 is freely inserted over the dust collar 202. Due to the tolerance `C 1' defined by the plurality of sealing members 220 at the non-operating position thereof, the sealing members 220 do not interfere with the dust collar 202 and thereby any damage, which otherwise caused in the existing design of the dust seal ring, is avoided. Due to the offset position of the main shaft 120 with respect to the central axis 'C' of the crusher 100, a varying gap is defined between the head center 150 and the dust collar 202. However, the tolerance 'C1' defined by the plurality of sealing members 220 helps to accommodate the varying gap and thereby the main shaft 120 is freely inserted over the dust collar 202 without any interference of the plurality of sealing members 220 with the dust collar 202 while the main shaft 120 is moving down to completely receive the bottom cylindrical portion 144 thereof within the eccentric 140.

At step 1106, the method 1100 includes merging the plurality of sealing members 220 to form the dust seal ring 300 between the head center 150 and the dust collar 202 to achieve the target tolerance 'C2' therebetween. Upon inserting the main shaft 120 completely into the housing 102 of the crusher 100, the actuating mechanism 600 is actuated to merge the plurality of sealing members 220 and thereby to form the dust seal ring 300 to abut the inner circumference 302 thereof with the outer surface 206 of the dust collar 202. In some embodiments, the method 1100 includes merging the plurality of sealing members 220 by inflating the inflatable tube 602. The valve 604 of the inflatable tube 602 is aligned with the access opening in the head center 150 and coupled with the fluid source 606 using the hose 608. The fluid source 606 may be operated to supply the fluid to the inflatable tube 602. Upon inflation of the inflatable tube 602, the plurality of sealing members 220 moves from the non-operating position to the operating position thereof. Further, the inner circumference 302 of the dust seal ring 300 abuts the outer surface 206 of the dust collar 202 and thereby achieves the target tolerance 'C2'.

In some embodiments, the method 1100 includes merging the plurality of sealing members 220 by supplying the fluid to the second cavity 412 of the annular groove 222 using the fluid source 702. The fluid source 702 may be coupled with the opening of the head center 150 and operated to supply the fluid, such as the gas, to the second cavity 412 of the annular groove 222. The pressurized gas received within the second cavity 412 moves the plurality of sealing members 220 from the non-operating position to the operating position thereby the inner circumference 302 of the dust seal ring 300 abuts the outer surface 206 of the dust collar 202 to achieve the target tolerance 'C2'.

In some embodiments, the method 1100 includes moving the plurality of sealing members 220 to the operating position thereof by the one or more fastening members 802. In one embodiment, the bolt 804 may be attached to the head center 150 along the radial axis such that the first end 806 of the bolt 804 is disposed outside the head center 150 for the user to access the bolt 804 and the second end 808 is disposed within the second cavity 412 of the annular groove 222. The user may use the tools to threadably move the fastening member 802 along the radial axis towards the sealing members 220. Such movement of the fastening member 802 causes the plurality of sealing members 220 to move from the non-operating position to the operating position thereof. Further, the plurality of sealing members 220 engages each other in the operating position thereof and form the dust seal ring 300 to abut the outer surface 206 of the dust collar 202. In another embodiment, the sliding member may be attached to the head center 150. The user may operate the second end of the sliding member such that the plurality of sealing members 220 engages each other in the operating position thereof and form the dust seal ring 300 to abut the outer surface 206 of the dust collar 202.

In some embodiments, the method 1100 includes securing the plurality of sealing members 220 in the operating position thereof using the engaging portion 902 of each of the plurality of sealing members 220 and the locking member 906. During the assembly of the main shaft 120, the locking member 906 is attached with the through hole 904 of the seal retainer 408. Upon movement of the plurality of sealing members 220 from the non-operating position to the operating position, the engaging portion 902 of the sealing member 220 may be aligned with the through hole 904 provided in the seal retainer 408. Further, the user may operate the locking member 906 to engage with the engaging portion 902 of the sealing member 220, thereby the plurality of sealing members 220 is secured in the operating position thereof.

The present disclosure relates to the dust sealing system 210 having the plurality of sealing members 220 engaged each other to form the dust seal ring 300 between the head center 150 of the main shaft 120 and the dust collar 202 to prevent entry of the dust particles from outside the crusher 100 to the mechanical elements provided inside of the crusher 100. The multiple sealing members 220 helps to avoid any damage of the dust seal ring 300, which otherwise occurs in the existing design of the dust seal ring. The multiple sealing members 220 are pulled apart from each other when initially disposed within the annular groove 222 and thereby allow free movement of the head center 150 of the main shaft 120 over the dust collar 202. After installation of the main shaft 120, the multiple sealing members 220 are engaged each other to form the dust seal ring 300 and abuts the dust collar 202. The ends of each of the sealing members 220 are overlapped with the ends of the adjacent sealing members 220 to provide sufficient seal between the sealing member 220 upon merging.

During installation of the main shaft 120 into the housing 102, the multiple sealing members 220 are inserted deeper into the annular groove 222 than required during the operation of the crusher 100. Such arrangements of the sealing members 220 within the annular groove 222 establishes the tolerance `C1' which is large enough to easily and freely insert the main shaft 120 into the housing 102 and the head center 150 may be lowered around the dust collar 202 without damaging the dust seal ring 300. Due to the larger clearance between the sealing members 220 and the head center 150, installation of the main shaft 120 in the housing 102 becomes easier and faster.

While aspects of the present disclosure have been particularly shown and described with reference to the embodiments above, it will be understood by those skilled in the art that various additional embodiments may be contemplated by the modification of the disclosed methods and systems without departing from the spirit and scope of what is disclosed. Such embodiments should be understood to fall within the scope of the present disclosure as determined based upon the claims and any equivalents thereof.

## Claims

1. A dust sealing ring (300) for a crusher (100) comprising:
a plurality of sealing members (220) configured to be at least partly received within an annular groove (222) of the crusher (100);
each sealing member (220) comprising a body (310) having a first end (312) and a second end (314), a first engaging face (316) defined at the first end (312) of the body (310) and a second engaging face (318) defined at the second end (314) of the body (310)
**characterized in that** the plurality of sealing members (220) are configured to move from a non-operating position to an operating position where the first engaging face (316) of sealing member (220) contacts the second engaging face of adjacent sealing members to form the dust sealing ring (300).

2. The dust sealing ring (300) according to claim 1, wherein the body (310) of the sealing members (220) have an arcuate shape.

3. The dust sealing ring (300) according to any one of the previous claims comprising at least three sealing members (220), such as at least four sealing members (220).

4. The dust sealing ring (300) according to any one of the preceding claims, wherein the first engaging face (316) of the body (310) comprises:
a first step portion (316A) defined at an outer circumference (304) of the body (310); and
a second step portion (316B) defined at an inner circumference (302) of the body (310).

5. The dust sealing ring (300) according to any one of the preceding claims, wherein the second engaging face (318) of the body (310) comprises:
a third step portion (318A) defined at the outer circumference (304) of the body (310); and
a fourth step portion (318B) defined at the inner circumference (302) of the body (310), wherein the first step portion (316A) and the second step portion (316B) of the first engaging face (316) of the one sealing member (220) are configured to engage with the third step portion (318A) and the fourth step portion (318B), respectively, of the second engaging face (318) of an adjacent sealing member (220), and the third step portion (318A) and the fourth step portion (318B) of the second engaging face (318) of the one sealing member (220) are configured to engage with the first step portion (316A) and the second step portion (316B), respectively, of the first engaging face (316) of another adjacent sealing member (220).

6. A dust sealing system (210) for a crusher (100), comprising:
a plurality of sealing members (220) configured to be at least partly received within an annular groove (222) such as an annular groove defined in a head center (150) of the crusher (100); and
an actuating mechanism (600) configured to move the plurality of sealing members (220) from a non-operating position to an operating position, wherein the plurality of sealing members (220) is together configured to form a dust seal ring (300) in the operating position thereof and abut a dust collar (202) of the crusher (100),
wherein a tolerance (C 1) defined between the plurality of sealing members (220) and the dust collar (202) at the non-operating position is greater than a target tolerance (C2) defined between the plurality of sealing members (220) and the dust collar (202) at the operating position.

7. The dust sealing system (210) according to claim 6, wherein the plurality of sealing members (220) is received within a first cavity (410) of the annular groove (222) and the actuating mechanism (600) is disposed within a second cavity (412) of the annular groove (222) defined adjacent the first cavity (410).

8. The dust sealing system (210) according to any of claims 6 to 7, wherein the actuating mechanism (600) comprises an inflatable tube (602), wherein the inflatable tube (602) is configured to move the plurality of sealing members (220) to the operating position.

9. The dust sealing system (210) according to any of claims 6 to 8, wherein the actuating mechanism (600) comprises a fluid source (702) configured to (i) supply a fluid to the second cavity (412) and, (ii) to move the plurality of sealing members (220) to the operating position.

10. The dust sealing system (210) according to any of claims 6 to 9, wherein the actuating mechanism (600) comprises one or more fastening members (802) configured to move the plurality of sealing members (220) to the operating position.

11. The dust sealing system (210) according to any of claims 6 to 10, wherein the actuating mechanism is a spring loaded or magnetic actuating mechanism.

12. The dust sealing system (210) according to any of claims 6 to 11, wherein each of the plurality of sealing members (220) comprises an engaging portion (902) configured to secure the dust seal ring (300) in the operating position thereof.

13. The dust sealing system (210) according to any of claims 6 to 12, further comprising a locking member (906) configured to secure the dust seal ring (300) in the operating position thereof.

14. The dust sealing system (210) according to any of claims 6 to 13, further comprising at least three sealing members (220A, 220B, 220C).

15. The dust sealing system (210) according to any of claims 6 to 14, wherein each sealing member (220) comprises:
an arcuate body (310) having a first end (312) and a second end (314);
a first engaging face (316) defined at the first end (312) of the arcuate body (310) and configured to engage with an adjacent sealing member (220); and
a second engaging face (318) defined at the second end (314) of the arcuate body (310) and configured to engage with an adjacent sealing member (220).

16. The dust sealing system (210) according to any of claims 6 to 15, wherein the plurality of sealing members (220) is circularly aligned such that the first engaging face (316) of one sealing member (220) is configured to engage with the second engaging face (318) of a previous sealing member (220), and the second engaging face (318) of the one sealing member (220) is configured to engage with the first engaging face (316) of a subsequent sealing member (220), and wherein the plurality of sealing members (220) are together configured to form the dust seal ring (300).

17. The dust sealing system (210) according to any of claims 6 to 16, wherein the first engaging face (316) of the arcuate body (310) comprises:
a first step portion (316A) defined at an outer circumference (304) of the arcuate body (310); and
a second step portion (316B) defined at an inner circumference (302) of the arcuate body (310).

18. The dust sealing system (210) according to any of claims 6 to 17, wherein the second engaging face (318) of the arcuate body (310) comprises:
a third step portion (318A) defined at the outer circumference (304) of the arcuate body (310); and
a fourth step portion (318B) defined at the inner circumference (302) of the arcuate body (310), wherein the first step portion (316A) and the second step portion (316B) of the first engaging face (316) of the one sealing member (220) are configured to engage with the third step portion (318A) and the fourth step portion (318B), respectively, of the second engaging face (318) of the previous sealing member (220), and the third step portion (318A) and the fourth step portion (318B) of the second engaging face (318) of the one sealing member (220) are configured to engage with the first step portion (316A) and the second step portion (316B), respectively, of the first engaging face (316) of the subsequent sealing member (220).

19. A method (1100) of installing a dust seal ring (300) in a crusher (100), comprising:
inserting a plurality of sealing members (220) into a first cavity (410) of an annular groove (222) of the crusher (100), such as an annular groove (222) defined in a head center (150) of the crusher (100);
inserting a main shaft (120) along with the head center (150) into a crushing chamber (156) of the crusher (100) over a dust collar (202), wherein a tolerance (C1) defined between the plurality of sealing members (220) and the dust collar (202) is greater than a target tolerance (C2) defined between the plurality of sealing members (220) and the dust collar (202) at an operating position of the dust seal ring (300); and
merging the plurality of sealing members (220) to form the dust seal ring (300) between the head center (150) and the dust collar (202) to achieve the target tolerance (C2) therebetween.

20. The method (1100) according to claim 19, further comprising merging the plurality of sealing members (220) by inflating an inflatable tube (602), wherein the inflatable tube (602) is disposed within a second cavity (412) defined adjacent the first cavity (410) of the annular groove (222).

21. The method (1100) according to any one of claims 19-20, further comprising merging the plurality of sealing members (220) by supplying a fluid to the second cavity (412) of the annular groove (222).

22. The method (1100) according to any one of claims 19-21, further comprising moving the plurality of sealing members (220) to the operating position thereof by one or more fastening members (802).

23. The method (1100) according to any one of claims 19-22, further comprising securing the plurality of sealing members (220) in the operating position thereof using an engaging portion (902) of each of the plurality of sealing members (220).

24. The method (1100) according to any one of claims 19-23, further comprising securing the plurality of sealing members (220) in the operating position thereof using a locking member (906).
